(19)

Europäisches
Patentamt
European
Patent Office
Office européen
des brevets

(11) **EP 4 361 184 A1**

(12) **EUROPEAN PATENT APPLICATION**

(43) Date of publication:
**01.05.2024 Bulletin 2024/18**

(21) Application number: **22203732.7**

(22) Date of filing: **26.10.2022**

(51) International Patent Classification (IPC):
**C08F 10/00** $^{(2006.01)}$ **C08F 110/02** $^{(2006.01)}$
**C08L 23/08** $^{(2006.01)}$ **C08F 210/16** $^{(2006.01)}$

(52) Cooperative Patent Classification (CPC):
(C-Sets available)
**C08F 10/00; C08F 110/02; C08L 23/0815;**
C08F 210/16; C08L 2203/16; C08L 2205/03;
C08L 2308/00; C08L 2314/02 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Polyolefine GmbH**
**50389 Wesseling (DE)**

(72) Inventors:
• **SCHUELLER, Ulf**
**64331 Weiterstadt (DE)**
• **MEIER, Gerhardus**
**60320 Frankfurt/M (DE)**

(74) Representative: **LyondellBasell**
**c/o Basell Polyolefine GmbH**
**Industriepark Hoechst, Bldg. E413**
**65926 Frankfurt am Main (DE)**

(54) **PROCESS FOR CONTROLLING THE SWELL RATIO OF A POLYETHYLENE COMPOSITION**

(57) A process for controlling the swell ratio of a polyethylene composition having a specified melt flow rate. The polyethylene composition is prepared in a process conducted in a polymerization apparatus comprising three or more polymerization zones in the presence of a polymerization catalyst and hydrogen as molecular weight regulator and the polymerization zones differ in the ratio of hydrogen to ethylene present in the polymerization zones and so forming, in the polymerization zones, three or more polyethylene components which differ in the average molecular weight, wherein one of the polyethylene components prepared in one of the polymerization zones has the highest average molecular weight and one of the polyethylene components prepared in another one of the polymerization zones has the second-highest average molecular weight.

EP 4 361 184 A1

(52) Cooperative Patent Classification (CPC): (Cont.)

C-Sets
**C08F 10/00, C08F 2/001;**
**C08F 10/00, C08F 4/6543;**
**C08F 110/02, C08F 2500/12, C08F 2500/07;**
**C08L 23/0815, C08L 23/0815, C08L 23/0815;**
C08F 210/16, C08F 210/14, C08F 2500/12,
C08F 2500/07, C08F 2500/26

**Description**

FIELD OF THE DISCLOSURE

The present disclosure provides a process for preparing a polyethylene composition comprising multimodal polyethylene.

BACKGROUND OF THE DISCLOSURE

Polyethylene is a widely used commercial polymer, whose success is based not only on the facts that it is possible to carry out the production at relatively low costs but also that it is possible to produce a large variety of materials that meet specific product requirements with respect to product properties and processability. A major application for polyethylene is for example preparing blow molded articles.

An important factor, which determines the suitability of the polyethylene for different applications is the swell ratio, which is also referred to as "die swell ratio". If the swell ratio is too high, the weight of the product increases. If the swell ratio is too low, it is difficult to form additional features, such as side handles on a container. Thus, depending on the desired end product, different requirements have to be fulfilled and customers can only accept products within a tight range of swell ratio.

Depending on the application the requirements for the swell ratio may vary. For example, the swell ratio requirements for the blow molding process to produce canisters at high speed in continuous mode may differ from the requirements for small blow molding applications or large blow molding applications, such as large containers, or L-ring drums.

There is accordingly a need for a variable process that allows the production of multimodal polyethylene compositions having a swell ratio within a specified range, and which can easily switch to the production of a multimodal polyethylene composition having a different swell ratio.

SUMMARY OF THE DISCLOSURE

The present disclosure provides a process as outlined in claim 1. In particular, the present disclosure provides a process for controlling the swell ratio of a polyethylene composition having a specified melt flow rate, wherein the polyethylene composition is prepared in a process conducted in a polymerization apparatus comprising three or more polymerization zones in the presence of a polymerization catalyst and hydrogen as molecular weight regulator and the polymerization zones differ in the ratio of hydrogen to ethylene present in the polymerization zones and so forming, in the polymerization zones, three or more polyethylene components which differ in the average molecular weight, wherein one of the polyethylene components prepared in one of the polymerization zones has the highest average molecular weight and one of the polyethylene components prepared in another one of the polymerization zones has the second-highest average molecular weight, wherein for increasing the swell ratio, the difference between the average molecular weight of the polyethylene component having the highest average molecular weight and the average molecular weight of the polyethylene component having the second-highest average molecular weight is increased, and for decreasing the swell ratio, the difference between the average molecular weight of the polyethylene component having the highest average molecular weight and the average molecular weight of the polyethylene component having the second-highest average molecular weight is decreased.

In some embodiments, the step of increasing or decreasing the difference between the average molecular weight of the polyethylene component having the highest average molecular weight and the average molecular weight of the polyethylene component having the second-highest average molecular weight is or includes a step of modifying the ratio of hydrogen to ethylene in the polymerization zones in which the polyethylene component having the highest average molecular weight is prepared or in the polymerization zones in which the polyethylene component having the second-highest average molecular weight is prepared. The ratio of hydrogen to ethylene may for example be modified by adjusting the hydrogen feed to the respective polymerization zones.

In some embodiments, the step of increasing or decreasing the difference between the average molecular weight of the polyethylene component having the highest average molecular weight and the average molecular weight of the polyethylene component having the second-highest average molecular weight is or includes a step of changing the temperature in the polymerization zones in which the polyethylene component having the highest average molecular weight is prepared or in the polymerization zones in which the polyethylene component having the second-highest average molecular weight is prepared.

In some embodiments, for keeping the melt flow rate of the polyethylene composition at the specified value while increasing or decreasing the difference between the average molecular weight of the polyethylene component having the highest average molecular weight and the average molecularweight of the polyethylene component having the second-highest average molecular weight, the polymerization conditions in one or more polymerization zones which are neither the polymerization zone, in which the polyethylene component having the highest average molecular weight is prepared, nor the polymerization zone, in which the polyethylene component having the second-highest average molecular weight is prepared, are changed.

In some embodiments, for keeping the melt flow rate of the polyethylene composition at the specified value while increasing or decreasing the difference between the average molecular weight of the polyethylene component having the highest average molecular weight and the average molecular weight of the polyethylene component having the second-highest average molecular weight, the polymerization conditions in the polymerization zone, in which the polyethylene component having the second-highest average molecular weight is prepared, is changed.

In some embodiments, the polymerization conditions in one or more polymerization zones, which are neither the polymerization zone, in which the polyethylene component having the highest average molecular weight is prepared, nor the polymerization zone, in which the polyethylene component having the second-highest average molecular weight is prepared, are kept constant while the swell ratio is increased or decreased.

In some embodiments, the polymerization apparatus comprises a series of three subsequent polymerization reactors.

In some embodiments, the polymerization apparatus comprises a series of a fluidized-bed reactor and a multizone circulating reactor.

In some embodiments, a gas fraction will be removed from the reaction mixture in a gas separator between at least two polymerization zones.

In some embodiments, the process relates to a process for preparing at least two types of polyethylene composition having a specified melt flow rate and different swell ratios, the process comprising polymerizing ethylene in the presence of a polymerization catalyst and hydrogen as a molecular weight regulator in a series of polymerization reactors comprising three or more polymerization zones, wherein the polymerization zones differ in the ratio of hydrogen to ethylene present in the polymerization zones and so forming, in the polymerization zones, three or more polyethylene components which differ in the average molecular weight, wherein one of the polyethylene components prepared in one of the polymerization zones has the highest average molecular weight and one of the polyethylene components prepared in another one of the polymerization zones has the second-highest average molecular weight, wherein for increasing the swell ratio, the difference between the average molecular weight of the polyethylene component having the highest average molecular weight and the average molecular weight of the polyethylene component having the second-highest average molecular weight is increased, and for decreasing the swell ratio, the difference between the average molecular weight of the polyethylene component having the highest average molecular weight and the average molecular weight of the polyethylene component having the second-highest average molecular weight is decreased.

In some embodiments, the at least two types of polyethylene compositions are prepared subsequently without interruption of the process.

In some embodiments, at least one of the at least two polyethylene compositions, preferably each of the at least two polyethylene compositions is a high density polyethylene composition having a density of from 0.940 to 0.968 g/cm$^3$.

BRIEF DESCRIPTION OF THE DRAWINGS

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the drawings and detailed description are to be regarded as illustrative in nature and not restrictive.

Figure 1 shows schematically an exemplary set-up for preparing a polyethylene composition, wherein the swell ratio of a polymer composition is controlled.

Figure 2 shows schematically an alternative exemplary set-up for preparing a polyethylene composition, wherein the swell ratio of the composition is controlled.

DETAILED DESCRIPTION OF THE DISCLOSURE

It is understood that the specified melt flow rate may be a requirement given by the application and/or customer. The specified melt flow rate may for example be about 2.7, about 5.5, about 7.5, about 11 or about 30. The term "about", as used herein, may include variations of $\pm 25\%$ from the specified value. In particular, the specified melt flow rate may encompass a range from 2.0 to 3.0, from 4.5 to 6.5, from 6.5 to 8.5, from 9 to 13 or from 23 to 37. Within these ranges the swell ratio may be controlled from 120% to 250% by adapting the difference between the average molecular weight of the heaviest and the second heaviest component.

As used herein, the term "comprising" has the broad standard meaning "including", "encompassing", or "containing". It includes the explicitly recited elements, and also allows the presence of other elements not recited. In addition to this broad encompassing meaning, as used herein, the term "comprising" may also have the limiting meaning "consisting of". This means that any aspect or embodiment of the present application is defined as comprising certain features, also includes the meaning of merely consisting of said features, whether this is explicitly stated or not. In addition, the term "comprising" may also have the meaning "consisting essentially of".

As used herein, the term "swell" or "die swell" refers to the expansion of a free form parison (or annular tube of molten plastic) upon exit from any die geometry (convergent, divergent, straight, etc.), after the molten precursor resin has been delivered under pressure to the die, by means of a conventional extruder. Hence, die swell is an instance where a polymer stream is compressed by entrance into a die, and is followed by a partial recovery back to the former shape and volume of the polymer after exiting the die.

The present disclosure provides a process for controlling the swell ratio of a polyethylene composition having a specified melt flow rate. The polyethylene composition may particularly be a multimodal ethylene copolymer. The term "multimodal" hereby refers to the modality of the obtained ethylene copolymer and indicates that the ethylene copolymer comprises at least three fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization zones. In one embodiment, the polyethylene composition may be a multimodal ethylene copolymer having exactly three modalities.

The ethylene copolymers are prepared by polymerizing ethylene and one or more $C_3$-$C_{12}$-1-alkenes in the presence of a polymerization catalyst. The $C_3$-$C_{12}$-1-alkenes may be linear or branched. Preferred $C_3$-$C_{12}$-1-alkenes are linear $C_3$-$C_{10}$-1-alkenes such as propylene, 1-butene, 1-pentene, 1-hexene, 1-heptene, 1-octene, or 1-decene or branched $C_2$-$C_{10}$-1-alkenes such as 4-methyl-1-penten. It is also possible to polymerize ethylene with mixtures of two or more $C_3$-$C_{12}$-1-alkenes. Preferred comonomers are $C_3$-$C_8$-1-alkenes, in particular 1-butene, 1-pentene, 1-hexene, 1-heptene and/or 1-octene. The amount of units in the prepared multimodal ethylene copolymers which are derived from incorporated comonomers are preferably from 0.01 wt % to 25 wt.%, more preferably from 0.05 wt% to 15 wt.% and in particular from 0.1 wt.% to 12 wt%. Particular preference is given to processes in which ethylene is copolymerized with from 0.1 wt.% to 12 wt.% of 1-hexene and/or 1-butene and especially from 0.1 wt.% to 12 wt.% of 1-hexene.

In a preferred embodiment of the present disclosure, the multimodal ethylene copolymer is an ethylene-1-hexene copolymer, i.e. is an ethylene copolymer which has been obtained by copolymerizing ethylene as main monomer and 1-hexene as comonomer.

The multimodal ethylene copolymer may comprise at least two comonomers, i.e. the multimodal ethylene copolymer may be a terpolymer or a copolymer comprising more than two kinds of comonomers. Especially preferred ethylene copolymers comprise at least 1-hexene and 1-butene as comonomers.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as a support material. A large fraction of high density polyethylene blow molding compositions are made with chromium catalysts. However, it has been found that the ability to change the swell ratio of products produced by chromium catalysts is limited. Furthermore, the stress cracking resistance ESCR of products made with chromium catalysts are inferior compared to the stress cracking resistance ESCR of multimodal products made with Ziegler-Natta catalysts. Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-heylaluminum or diethylaluminum chloride or mixtures thereof.

The process of the present disclosure may be a polymerization process carried out in a series of at least two reactors.

In one embodiment the polymerization process may be carried out in a gas-phase. The process may be carried out in two or more gas-phase polymerization reactors, preferably in exactly two gas-phase polymerization reactors arranged in series. The gas-phase polymerization reactors of the series of reactors can be any kind of gas-phase polymerization reactors, such as horizontally or vertically stirred gas-phase reactors, multizone circulating reactors, or fluidized-bed reactors. The gas-phase polymerization reactors of the series of reactors can be of the same type or it is possible that the series of reactors comprises different types of gas-phase polymerization reactors. In some embodiments, the gas-phase polymerization in the reactor series may be preceded by a prepolymerization stage, which is then preferably carried out as suspension polymerization, preferably in a loop reactor. In an exemplary embodiment of the present disclosure, the polymerization may be carried out in a series of reactors comprising a fluidized-bed reactor as a first reactor and, arranged downstream thereof, a multizone circulating reactor.

Fluidized-bed reactors are reactors in which the polymerization takes place in a bed of polyolefin particles which is maintained in a fluidized state by feeding in a reaction gas mixture at the lower end of a reactor, usually below a gas distribution grid having the function of dispensing the gas flow, and taking off the gas again at the top of the fluidized-bed reactor. The reaction gas mixture is then returned to the lower end of the reactor via a recycle line equipped with a centrifugal compressor and a heat exchanger for removing the heat of polymerization. The flow rate of the reaction gas mixture has to be sufficiently high firstly to fluidize the bed of finely divided polymer present in the polymerization zone and secondly to remove the heat of polymerization effectively.

Multizone circulating reactors are, for example, described in WO 97/04015 A1 and WO 00/02929 A1 and have two interconnected polymerization zones, a riser, in which the growing polyolefin particles flow upward under fast fluidization or transport conditions and a downcomer, in which the growing polyolefin particles flow downward in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is equipped with a centrifugal compressor and a heat exchanger for removing the heat of polymerization. Preferably, a line for feeding catalyst or a line for feeding polyolefin particles coming from an upstream reactor is arranged on the riser and a polymer discharge system is located in the bottom portion of the downcomer. The introduction of make-up monomers, comonomers, hydrogen and/or inert components may occur at various points along the riser and the downcomer.

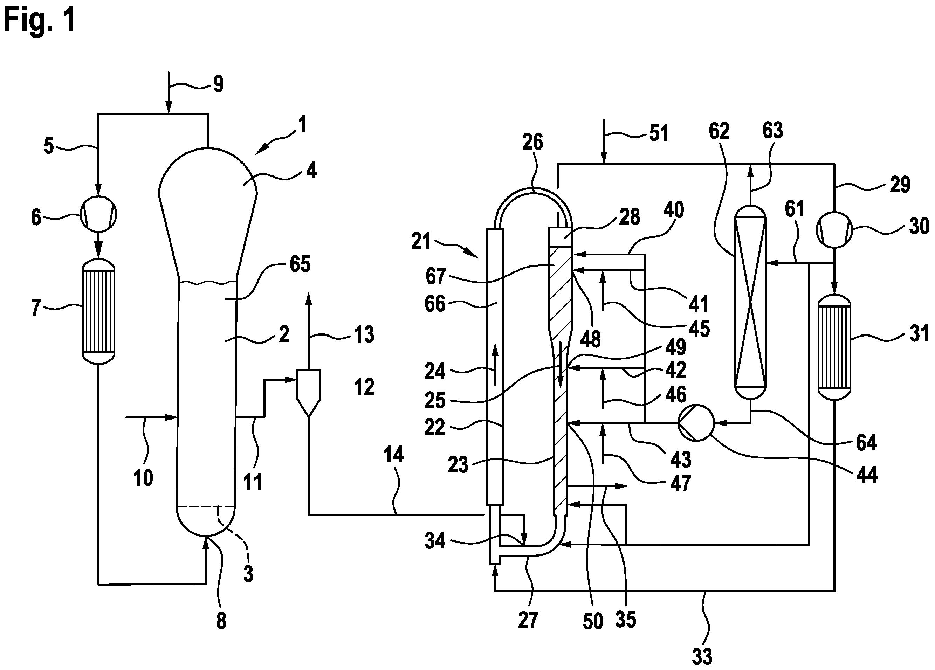

An exemplary embodiment of a set-up comprising a series of a fluidized-bed reactor (1) arranged upstream of a multizone circulating reactor (21) is shown in Fig. 1.

In the fluidized-bed reactor (1), ethylene can be polymerized, preferably in the presence of propane as an inert diluent and hydrogen as a molecular weight regulator. The fluidized-bed reactor (1) comprises a fluidized bed (2) of polyethylene particles, a gas distribution grid (3) and a velocity reduction zone (4). The velocity reduction zone (4) is generally of increased diameter compared to the diameter of the fluidized bed portion of the reactor. The polyethylene bed is kept in a fluidization state by an upwardly flow of gas fed through the gas distribution grid (3) placed at the bottom portion of the reactor (1). The gaseous stream of the reaction gas leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). Make-up monomers, molecular weight regulators, such as hydrogen, and propane as inert diluent may be fed into the reactor (1) at various positions, for example via line (9) upstream of the compressor (6). Catalyst may be fed into the fluidized-bed reactor (1) via line (12) that is preferably placed in the lower part of the fluidized bed (2).

The polyethylene particles obtained in the fluidized-bed reactor (1) may be discontinuously discharged via line (11) and fed to a solid/gas separator (12) in order to avoid that the gaseous mixture coming from fluidized-bed reactor (1) enters the second gas-phase reactor. The gas leaving the solid/gas separator (12) exits the reactor via line (13) as off-gas, while the separated polyolefin particles are fed via line (14) to the second gas-phase reactor.

The second gas-phase reactor may be a multizone circulating gas-phase reactor (21) with two reaction zones, riser (22) and downcomer (23), which are repeatedly passed by the polyethylene particles. Within the riser (22), the polyethylene particles flow upward under fast fluidization conditions along the direction of arrow (24). Within the downcomer (23) the polyethylene particles flow downward under the action of gravity along the direction of arrow (25). The riser (22) and the downcomer (23) are by an upper interconnection bend (26) and a lower interconnection bend (27).

After flowing through the riser (22), the polyethylene particles and the gaseous mixture leave the riser (22) and are conveyed through the upper interconnection bend (26) to a solid/gas separation zone (28). This solid/gas separation can be effected by using conventional separation means such as, for example, a centrifugal separator like a cyclone. From the separation zone (28) the polyethylene particles enter the downcomer (23).

The gaseous mixture leaving the separation zone (28) is recycled to the riser (22) by means of a recycle line (29), equipped with a compressor (30) and a heat exchanger (31). Downstream of the heat exchanger (31) the recycle gas is conveyed to the bottom of the riser (22) via line (33), so as to establish fast fluidization conditions therein.

The polyethylene particles coming from the first gas-phase reactor via line (14) enter the multizone circulating gas-phase reactor (21) at the lower interconnection bend (27) in position (34).

The polyethylene particles obtained in the multizone circulating reactor (21) may be continuously discharged from the bottom part of the downcomer (23) via the discharge line (35).

In orderto prevent the reaction gas mixture of the riser (22) from entering the downcomer (23) a liquid stream may be fed as a barrier fluid into the upper part of the downcomer via line (40). The liquid for generating the barrier may originate from partially condensing recycle gas mixture and separating liquid and gaseous components in a separating vessel (62), e.g. a column. The separating vessel (62) is fed with compressed recycle gas via line (61) that branches off the recycle line (29) between the compressor (30) and the heat exchanger (31). The separated gas-phase may be reintroduced into the recycle line via line (63) and the liquid fraction may be withdrawn from the separating vessel (62) via line (64) and fed to the downcomer (23) through lines (40), (41), (42) and (43) by means of a pump (44). Make-up monomers, make-up comonomers, and optionally inert gases and/or process additives can be introduced via lines (45), (46) and (47) into lines (41), (42) and (43), respectively, and then fed into the downcomer (23) at monomer feeding points (48), (49), and (50).

Make-up monomers, make-up comonomers, and optionally inert gases and/or process additives can further be introduced into the recycle line (29) via line (51).

The polymerization apparatus according to Fig. 1 comprises three polymerization zones, a first polymerization zone (65) formed by the fluidized-bed reactor (1), a second polymerization zone (66) formed by the riser (22) and a third polymerization zone (67) formed by the downcomer (23). Each polymerization zone differs in the ratio of hydrogen to ethylene, thus forming three polyethylene components, which differ in the average molecular weight. In the first polymerization zone (65) a polyethylene component having the lowest molecular weight is produced. In the second polymerization zone (66) a polyethylene component having a medium molecularweight is produced and in the third polymerization zone (67) a polyethylene component having a higher molecular weight is produced.

It has been found that the swell ratio of the final polyethylene composition may be controlled by manipulating the difference between the average molecular weight of the polyethylene component having the highest average molecular weight and the average molecular weight of the polyethylene component having the second-highest average molecular weight. For increasing the swell ratio, the difference between the average molecular weight of the polyethylene component having the highest average molecularweight and the average molecularweight of the polyethylene component having the second-highest average molecular weight may be increased, and for decreasing the swell ratio, the difference between the average molecular weight of the polyethylene component having the highest average molecular weight and the average molecular weight of the polyethylene component having the second-highest average molecular weight may be decreased.

In one embodiment, the step of increasing or decreasing the difference between the average molecular weight of the polyethylene component having the highest average molecular weight and the average molecular weight of the polyethylene component having the second-highest molecular weight may include a step of modifying the ratio of hydrogen to ethylene present in the polymerization zones in which the polyethylene component having the highest average molecular weight is prepared or to the polymerization zones in which the polyethylene component having the second-highest average molecular weight is prepared. The ratio of hydrogen to ethylene in the polymerization zone in which the polyethylene component having the highest average molecular weight is prepared may for example be adjusted between 0.002 to 0.500. The ratio of hydrogen to ethylene in the polymerization zone in which the polyethylene component having the second highest average molecular weight may for example be adjusted 0.020 to 1.000. The ratio of hydrogen to ethylene may be adjusted by manipulating the hydrogen feed to the respective polymerization zone.

In the embodiment shown in Fig.1, the hydrogen to ethylene feed to the downcomer (23) may be manipulated by changing the conditions of the column, for example by increasing the heat introduced to the bottom of the column. The composition leaving the column may be analyzed and the flow rate of the heating fluid to the heat exchanger (not shown) at the bottom of the column may be adjusted either manually or automatically until the desired hydrogen content is reached.

Alternatively or in addition, the difference between the average molecular weight of the polyethylene component having the highest average molecular weight and the average molecular weight of the polyethylene component having the second-highest average molecular weight may include a step of changing the temperature in the polymerization zones in which the polyethylene component having the highest average molecular weight is prepared or in the polymerization zones in which the polyethylene component having the second-highest average molecular weight is prepared.

It is particularly preferred to keep the melt flow rate of the polyethylene composition at a specific value, while increasing or decreasing the difference between the average molecular weight of the polyethylene component having the highest average molecular weight and the average molecularweight of the polyethylene component having the second-highest average molecular weight. The melt flow rate may be kept constant by adjusting the polymerization conditions in any of the polymerization zones while increasing or decreasing the swell ratio.

In one embodiment, the polyethylene composition may be kept at the specified value by adjusting the polymerization conditions in a polymerization zone that does neither comprise the polyethylene component having the highest average molecular weight nor the polyethylene component having the second-highest average molecular weight.

The melt flow rate of the polyethylene composition may be kept at the specified value while increasing or decreasing the difference between the average molecular weight of the polyethylene component having the highest average molecular weight and the average molecular weight of the polyethylene component having the second-highest average molecular weight by adjusting the polymerization conditions in the first polymerization zone (65), i.e. the polymerization zone in which neither the polyethylene component having the highest average molecular weight nor the polyethylene component having the second-highest average molecular weight is prepared.

Alternatively or additionally, the reaction conditions in the polymerization zone that is neither the polymerization zone in which the polyethylene component having the highest average molecular weight nor the polymerization zone in which the polyethylene component having the second-highest average molecular weight is prepared, in this example the first polymerization zone (65), may be kept constant. The melt flow rate of the polyethylene composition may be further adjusted by manipulating the hydrogen to ethylene ratio in the second polymerization zone, i.e. the polymerization zone in which the polyethylene component having the second-highest average molecular weight.

The process may further include the step of analyzing the hydrogen to ethylene ratio for each polymerization zone. The ratio may for example be analyzed via chromatography, such as gas chromatography.

In one embodiment, the process further comprises the step of analyzing the final polyethylene composition and adjusting the hydrogen feed to the respective polymerization zone, until the polyethylene composition has a specified melt flow index within a predetermined range and a specified swell ratio within a predetermined range. This step may in one embodiment be computer implemented. Alternatively, the step may be achieved manually.

In the process of the present disclosure, the gaseous stream withdrawn from the polymerization apparatus may be fed to an analyzer. The analyzer can be a gas chromatograph, a Raman probe, an IR detector, a mass spectrometer or a thermal conductivity detector. The analyzer is preferably a gas chromatograph.

Before being introduced into the analyzer, the gaseous stream may be passed through a bed of particulate solid having at the surface chemical groups which are reactive with the organometallic compound.

In preferred embodiments of the present disclosure, the particulate solid having at the surface chemical groups which are reactive with the organometallic compound is a porous material such as talc, a sheet silicate, or an inorganic oxide.

Inorganic oxides suitable as particulate solid may be found among oxides of the elements of groups 2, 3, 4, 5, 13, 14, 15 and 16 of the Periodic Table of the Elements. Preference is given to oxides or mixed oxides of the elements calcium, aluminum, silicon, magnesium ortitanium. Other inorganic oxides which can be used on their own or in combination with the abovementioned oxides are, for example, $ZrO_2$ or $B_2O_3$. Preferred oxides are silicon dioxide, in particular in the form of a silica gel or a pyrogenic silica, aluminum oxide or silicon aluminum mixed oxides. A preferred mixed oxide is, for example, calcined hydrotalcite. Preference is also given to using silica of the formula $SiO_2 \cdot a\, Al_2O_3$, where a is from 0 to 2, preferably from 0 to 0.5. The particles of the particulate solid can be in granular form, or the particles are in spray-dried form in which the particles of the particulate solid are composed of much smaller primary particles having, for example, a mean particle diameter of from 5 nm to 5 $\mu$m.

The particulate solid having at the surface chemical groups which are reactive with the organometallic compound is preferably build of particles having a mean particle diameter in the range from 50 $\mu$m to 10 mm, more preferably from 200 $\mu$m to 5 mm. The particulate solid has preferably a specific surface area in the range from 200 $m^2$/g to 1000 $m^2$/g, more preferably from 500 $m^2$/g to 800 $m^2$/g determined by gas adsorption according to the BET method as specified in ISO 9277:2010.

The chemical groups at the surface the particulate solid which are reactive with the organometallic compound are preferably OH groups, adsorbed water or, in particular for calcinated solids, strained Si-O-Si bridges.

In preferred embodiments of the present disclosure, the particulate solid having at the surface chemical groups which are reactive with the organometallic compound is a silica gel which is equipped with a humidity indicator.

In preferred embodiments of the present disclosure, the gaseous stream withdrawn from the polymerization apparatus is a continuous gas stream which is withdrawn from the polymerization apparatus at a flow rate of from 1 Nl/h to 500 Nl/h, preferably from 5 Nl/h to 350 Nl/h, and in particular from 10 Nl/h to 250 Nl/h. The unit "Nl" has to understood a norm liter, which the amount of a gas having a volume of one liter at the norm conditions of 101325 Pa (= 1.01325 bar) and 0°C. As used herein, 1 g/h corresponds to about 11.9 Nl/h.

In preferred embodiments of the present disclosure, the analyzer is provided with the sample of the gaseous stream at intervals.

In preferred embodiments of the present disclosure, two or more, for example two, three, four or five, gaseous streams are withdrawn from the polymerization apparatus at different positions and samples of some or of all of the two or more gaseous streams are fed subsequently to one analyzer for analyzing the sample or some or all of the two or more gaseous streams have a dedicated analyzer which is only provided with samples of one of the gaseous streams withdrawn from the polymerization apparatus.

For analyzing a material composition in a polymerization apparatus according to the present disclosure, a gaseous stream is withdrawn from the polymerization apparatus. The gaseous stream is preferably conveyed into a sampling loop which is located close to or preferably within the analyzer such as the gas chromatograph. The sampling loop provides a defined volume of a gaseous sample which is then transferred, for example by an inert carrier gas, into the analyzing unit. The analyzer is commonly calibrated so that the sum of all measured components is 100%. However, it has been found that when withdrawing the gaseous stream from a polymerization apparatus in which an olefin polymerization in the presence of a polymerization catalyst and an organometallic compound is carried out, this calibrated value is not stable and the measured sum of all components continuously decreases. The more the measured sum of the components deviates from 100%, the less precise the measurement becomes. It has been further found that recalibration of the analyzer allows to bring the measured sum of the components back to 100%, however, after each recalibration, the period until a no longer tolerable deviation is reached gets shorter and shorter. It has been found that due to fine solid particles which accumulate within the sample loop, the volume of the sample loop slowly shrinks so that the volume dosed into the analyzer decreases and the analysis values are distorted. After one or two recalibrations of the analyzer, a cleaning of the sample loop and sampling valve is inevitable.

Passing the gaseous stream withdrawn from the polymerization apparatus through a bed of particulate solid having at the surface chemical groups which are reactive with the organometallic compound avoids the accumulation of fine solid particles within the sampling device of the analyzer and the measured sum of all components remains stable. By passing the gaseous stream through a bed of particulate solid having at the surface chemical groups which are reactive with the organometallic compound, the concentration of the organometallic compound in the gas stream exiting the bed of particulate solid is preferably less than 99%, more preferably less than 99.5%, even more preferably less than 99.8%, and in particular less than 99.9% of the concentration of the organometallic compound in the gaseous stream withdrawn from the polymerization apparatus.

The bed of particulate solid having at the surface chemical groups which are reactive with the organometallic compound is preferably contained in a vessel having a volume of from 50 $cm^3$ to 10 000 $cm^3$, preferably from 100 $cm^3$ to 5000 $cm^3$, and more preferably from 200 $cm^3$ to 2500 $cm^3$.

The results obtained by the analysis of samples of the gaseous stream give information about the conditions within the polymerization apparatus. These data may be used on the one hand to define polymerization conditions for certain grades or conditions and on the other hand to adapt the measured polymerization conditions to predefined values. Such adaptations can be carried out manually by an operator or can be carried out automated. In preferred embodiments of the present disclosure, the results obtained by the analysis of samples of the gaseous stream are fed as a measurement signals to a controller for controlling the olefin polymerization process.

Between at least two polymerization zones a gas separator may be provided. As used herein, a gas separator is understood as any construction that separates the reaction mixture into a gas fraction and a solid and/or liquid fraction, wherein the gas fraction may be removed from the remainder of the reaction mixture. Such a gas separator may for example be flash vessels, gas lock hoppers, barriers, cyclones or the like.

At least two different types of polyethylene composition having a specified melt flow rate and different swell ratios may be prepared subsequently. In particular, a first type of a polyethylene composition can be prepared for a specified time frame and without interruption of the process, i.e. a shutdown or the like, a further type having the same melt flow rate but a different swell ratio may be prepared.

In an alternative embodiment, the process of the present disclosure may be a polymerization process carried out in suspension. The process of the present disclosure may be carried out in a series of one first polymerization reactor and one or more subsequent polymerization reactors, wherein each polymerization reactor forms a polymerization zone. Such suspension polymerizations, which are also designated as slurry polymerizations, take place in a medium, the so-called suspension medium, which is in liquid or in supercritical state under the conditions in the respective polymerization reactor and in which the produced ethylene polymer insoluble and forms solid particles. The solids content of the suspension is generally in the range of from 10 to 80 wt. %, preferably in the range of from 20 to 40 wt.%.

The suspension medium, which forms the liquid or supercritical phase of the suspension, commonly comprises as main component a diluent but also comprises further components like, for example, dissolved monomers and comonomers, dissolved cocatalysts or scavengers like aluminum alkyls, dissolved reaction auxiliaries like hydrogen or dissolved reaction products of the polymerization reaction like oligomers or waxes. Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. In preferred embodiments, the diluent is a hydrocarbon mixture. For producing hydrocarbon mixtures from a raw material, a less high demand for separating the components of the raw material is needed than for producing a specific hydrocarbon, and accordingly hydrocarbon mixtures are economically more attractive as diluent, but show the same diluent performance as specific hydrocarbons. However, hydrocarbon mixtures may have a boiling point range.

The diluent preferably has a boiling point which is significantly different from those of the monomers and comonomers used in order to make it possible for these starting materials to be recovered from a mixture by distillation. Such diluents are for example hydrocarbons having a boiling point above 40°C or even above 60°C or mixtures comprising a high proportion of these hydrocarbons. Thus, in preferred embodiments of the present disclosure, the polymerization takes place in a liquid suspension medium comprising more than 50 wt.% of saturated hydrocarbons having a boiling point of above 60°C at 0.1 MPa or even comprising more than 80 wt.% of saturated hydrocarbons having a boiling point of above 60°C at 0.1 MPa.

The slurry polymerization may be performed at reactors temperatures from 60°C to 95°C, preferably from 65°C to 90°C, and more preferably from 70°C to 85°C, and at reactor pressures from 0.15 MPa to 3 MPa, preferably from 0.2 MPa to 2 MPa, more preferably from 0.25 MPa to 1.5 MPa.

Catalyst is fed to the polymerization reactor, along with a diluent, aluminum alkyl, ethylene and optionally, co-monomers and hydrogen, where the fed components react to form a polyethylene product suspended in a slurry also containing diluent, unreacted ethylene and wax. In the polyethylene product, polymer forms around the catalyst particles as a result of the polymerization reactions, so that the catalyst becomes part of the polyethylene itself.

Preferably, the slurry polymerization is conducted in a multi-reactor cascade where the reactors are operated in series, and the catalyst remains active within the polymer as the polymer flows from reactor to reactor. More preferably, the slurry polymerization is conducted in a three-reactor series. In this configuration, slurry from the first reactor in the series flows to the second reactor, and slurry from the second reactor flows to the third reactor.

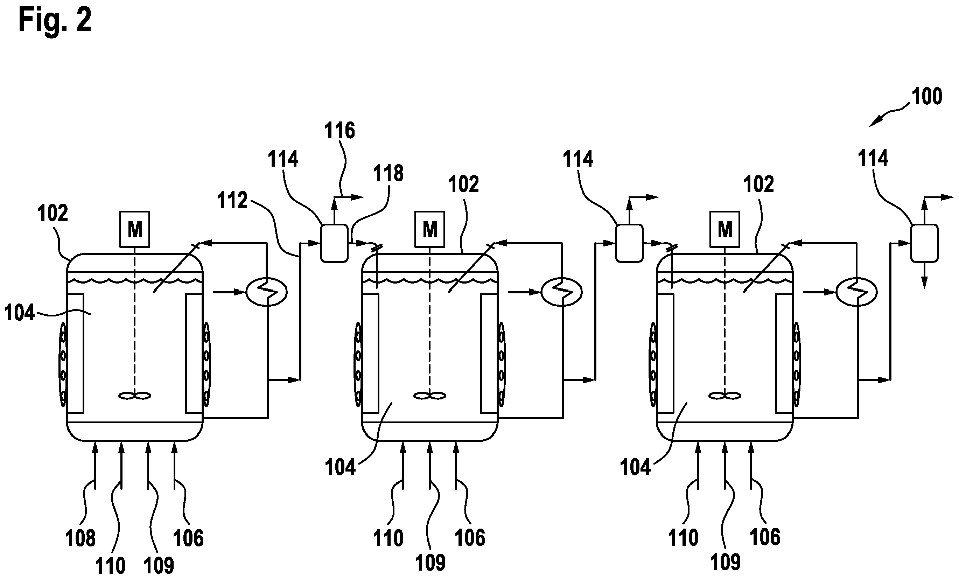

An exemplary embodiment of a reactor cascade (100) comprising three reactors (102) operated in series is schematically illustrated in Fig. 2.

Each reactor (102) of the reactor cascade (100) may form a single polymerization zone (104). As shown in Fig. 2, the reactors (102) may be continuous stirred tank reactors. The diluent for polymerizing the olefins in the first polymerization reactor (102) via feeding line (106), while the other components if the reaction mixture like catalyst, monomer, possible comonomers and polymerization auxiliaries, such as hydrogen, are fed to the reactor via feeding lines (108), (109), (110). As a result of the polymerization in reactor (1) a slurry of solid polyolefin particles in a suspension medium is formed. This slurry is fed via line (112) to the second polymerization reactor (102) where further polymerization occurs. A gas separator (114) may be provided between at least two subsequent reactors (102) of the reactor cascade (100). Said gas separator (114) may separate the reactor slurry into a vapor stream that flows through line (116) and liquid slurry product that flows through line (118).

The liquid slurry product may flow through line (118) into the subsequent reactor (102), such that the second reactor receives the liquid slurry product from the first reactor and the third reactor receives the liquid slurry product from the second reactor. Ethylene, diluent, and optionally hydrogen and comonomer are routed to the second polymerization reactor where the polymerization reaction is conducted in the slurry to form additional polyethylene. The reactor slurry of the second polymerization reactor is transferred to a second flash vessel which separates gas from the reactor slurry, with the separated liquid slurry product being routed to a third polymerization reactor. Ethylene, diluent and optionally hydrogen and comonomer are routed to the third polymerization reactor where a polymerization reaction is conducted in the slurry to form additional polyethylene. The reactor slurry of the third polymerization reactor is transferred to a third flash drum which separates gas from the reactor slurry, with the liquid slurry product being forwarded for solid/liquid separation and further processing of the polymer. The nature and the amount of the comonomer(s) and the hydrogen in the different reactors can be the same or different.

EXAMPLES

The following analytical methods are used to characterize the polymer compositions.

Density

Determined according to ISO 11831-1 at 23°C.

Melt flow rate MFR

Determined according to ISO 1133 at 190°C with the specified load.

Flow rate ratio

The flow rate ratio FRR is the ratio of $MFR_{21.6}/MFR_{2.16}$.

Rheological Measurements and Calculations

Rheological measurements are performed in accordance with ASTM 4440-95a, which measures dynamic rheology data in the frequency sweep mode (plate diameter 50 mm) in a nitrogen environment to minimize the sample oxidation/degradation with a gap in the parallel plate geometry of 1.2 to 1.4 mm and strain amplitude of 10%. Frequencies range from 0.0251 to 398.1 rad/sec.

ER is determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20 to 30). Storage modulus (G') and loss modulus of (G") are measured. The nine lowest frequency points are used (fice points per frequency decade) and a linear equation is fitted by least-squares regression to log G' versus log G". ER is then calculated from:

$$ER = (1.781 * 10^{-3}) * G'$$

at a value of $G" = 5,000 \text{ dyn/cm}^2$.

As those skilled in the art will recognize, when the lowest G" value is greater than 5,000 $dyn/cm^2$, the determination of ER involves extrapolation. The ER values calculated then will depend on the degree on nonlinearity in the log G' versus log G" plot. The temperature, plate diameter and frequency range are selected such that, within the resolution of the rheometer, the lowest G" value is close to or less than 5,000 $dyn/cm^2$.

Swell ratio

The swell ratio of the polyethylene composition is measured utilizing a capillary rheometer Gottfert Rheotester2000 and Rheograph25 at T= 190°C, equipped with a commercial 30/2/2/20 die (total length 30 mm, active length = 2 mm, diameter = 2 mm, L/D = 2/2 and 20° entrance angle) and an optical device (laser-diode from Gottfert) for measuring the extruded strand thickness. Sample is molten in the capillary barrel at 190°C for 6 min and extruded with a piston velocity corresponding to a resulting shear-rate at the die of 1440 $s^{-1}$.

The extrudate is cut (by an automatic cutting device from Gottfert) at a distance of 150 mm from the die-exit, at the moment the piston reaches a position of 96 mm from the die inlet. The extrudate diameter is measured with the laser-diode at a distance of 78 mm from the die-exit, as a function of time. The maximum value corresponds to the $D_{extrudate}$. The swell-ratio is determined from the calculation:

$$SR = (D_{extrudate} - D_{die}) * \frac{100\%}{D_{die}}$$

wherein $D_{die}$ is the corresponding diameter at the die exit, measured with the laser diode.

Environmental stress cracking resistance according to full notch creep test (FNCT)

The environmental stress cracking resistance of polymer samples is determined in accordance to international standard ISO 16770 (FNCT) in aqueous surfactant solution. From the polymer sample a compression molded 10 mm thick sheet has been prepared. The bars with squared cross section ($10 \times 10 \times 100$ mm) are notched using a razor blade on four sides perpendicularly to the stress direction. A notching device described in M. Fleissner in Kunststoffe 77 (1987), pp. 45 is used for the sharp notch with a depth of 1.6 mm.

The load applied is calculated from tensile force divided by the initial ligament area. Ligament area is the remaining area = total cross-section area of specimen minus the notch area. For FNCT specimen: 10x10 $mm^2$ - 4 times of trapezoid notch area = 46.24 $mm^2$ (the remaining cross-section for the failure process/crack propagation). The test specimen is loaded with standard condition suggested by the ISO 16770 with constant load of 4 MPa at 80°C or of 6 MPa at 50°C in a 2% (by weight) water solution of non-ionic surfactant ARKOPAL N100. Time until rupture of test specimen is detected.

Cast Film Measurement

The film measurement of gels was carried out on an OCS extruder type me 23

Example 1

A polyethylene composition was prepared in a series of a fluidized-bed reactor and a multizone circulating reactor (MZCR) having two interconnected reaction zones as shown in Figure 1.

11.7 g/h of a Ziegler-Natta catalyst, which was prepared according to Example 1a of WO 2014/202420 A1 with a molar feed ratio of electron donor/Ti of 8, were fed using 0.7 kg/h of liquid propane to a first stirred precontacting vessel, into which triisobutylaluminum (TIBA) and diethylaluminum chloride (DEAC) were dosed. The weight ratio of triisobutylaluminum to diethylaluminum chloride was 7:1. The weight ratio of the aluminum alkyls to the catalyst solid was 5:1. The first precontacting vessel was kept at 50 °C with a residence time of 30 minutes. The catalyst suspension of the first precontacting vessel was continuously transferred to a second stirred precontacting vessel, which was operated with a residence time of 30 minutes and kept at 50 °C. The catalyst suspension was then transferred continuously to fluidized-bed reactor (1) via line (10).

In fluidized-bed reactor (1), ethylene was polymerized in the presence of propane as an inert diluent using hydrogen as a molecular weight regulator. 47.5 kg/h of ethylene and 185 g/h of hydrogen were fed to the fluidized-bed reactor (1) via line (9). No comonomer was added. The polymerization was carried out at a temperature of 80 °C and a pressure of 3.0 MPa. The selected feed rates resulted in the reactor in an ethylene concentration of 10.8 vol.% and a hydrogen concentration of 29.4 vol.%. The ratio of hydrogen to ethylene present in fluidized-bed reactor (1) was accordingly 2.7.

The polyethylene component obtained in the fluidized-bed reactor (1) had an $MFR_{2.16}$ of 84 g/10 min and a density of 0.967 g/cm$^3$.

The polyethylene component obtained in fluidized-bed reactor (1) was continuously transferred to multizone circulating reactor (21), which was operated at a pressure of 2.5 MPa and a temperature of 85 °C measured at the beginning of line (29) where the reaction gas mixture has just left separation zone (28). The riser (22) had an internal diameter of 200 mm and a length of 19 m. The downcomer (23) had a total length of 18 m, an upper part of 5 m with an internal diameter of 300 mm and a lower part of 13 m with an internal diameter of 150 mm. The final polymer was discontinuously discharged via line (35).

To prevent the reaction gas mixture of the riser (22) from entering the downcomer (23), 330 kg/h of a liquid stream were fed as barrier fluid into the upper part of the downcomer via line (40). The liquid for generating the barrier originated from partially condensing recycle gas mixture in heat exchanger (37) at working conditions of 55 °C and 2.6 MPa and separating liquid and gaseous components in separating vessel (38). The liquid barrier fluid had a composition that the gas produced by vaporizing the barrier fluid of 5.9 vol.% ethylene, 0.26 vol.% hydrogen, 0.47 vol.% 1-hexene and 93.4 vol.% propane. For dosing further monomers into the downcomer (23), additional 55 kg/h of the barrier fluid obtained in heat exchanger (37) were fed as dosing gas below the barrier to the three monomer feeding points (48), (49) and (50). The combined quantities of fresh monomers fed into the downcomer through monomer feeding points (48), (49) and (50) were 18 kg/h of ethylene and 0.93 kg/h of 1-hexene.

For reaching the targeted composition of the reaction gas mixture within the riser, 5 kg/h of propane, 27.8 kg/h of ethylene and 17 g/h of hydrogen were fed through line (51) into the recycle line (29).

Of the final polyethylene composition prepared in the series of fluidized-bed reactor (1) and multizone circulating reactor (21), 50% by weight were produced in the first reactor and 50% by weight were produced in the second reactor.

The polymerization conditions within riser (22) and downcomer (23) of multizone circulating reactor (21) are indicated in Table 1. Table 1 further reports the properties of the final polyethylene composition discharged from multizone circulating reactor (21).

In the first reactor, a polyethylene component having a lower average molecular weight is formed, in the second reactor, a polyethylene component having a medium average molecular weight is formed and in the third reactor a polyethylene component having the highest polyethylene component is formed. In order to control the swell ratio of the final polyethylene, the difference between the average molecular weight of the polyethylene component of the second reactor and of the third reactor may be manipulated, e.g. by changing the hydrogen to ethylene ratio and/or by changing the reaction temperatures in the second and third reactor. As the gas fraction is removed between the two reactors, the hydrogen to ethylene content may be adapted independently for each reactor.

Although Figure 2 illustrates a three-reactor system, it should be understood that the process can also include reactor systems containing more than three reactors.

Example 2

The polymerization of Example 1 was repeated under identical conditions except that the working conditions of column (62) for generating the barrier fluid were changed, e.g. by varying the amount of heat entering the column, and the liquid barrier fluid had a composition that the gas produced by vaporizing the barrier fluid had a hydrogen concentration of 0.21 %. Furthermore, it contained 5.9 vol.% ethylene, 0.52 vol.% 1-hexene and 93.4 vol.% propane.
The combined quantity of fresh monomers fed into the downcomer through monomer feeding points (48), (49) and (50) were 9 kg/h of ethylene and 1.025 kg/h of 1-hexene.
For reaching the targeted composition of the reaction gas mixture within the riser, 5 kg/h of propane, 27.8 kg/h of ethylene and 21 g/h of hydrogen were fed through line (51) into the recycle line (29).
The polymerization conditions within riser (22) and downcomer (23) of multizone circulating reactor (21) are indicated in Table 1. Table 1 further reports the properties of the final polyethylene composition discharged from multizone circulating reactor (21).

Example 3

The polymerization of Example 1 was repeated under identical conditions except that the working of column (62) for generating the barrier fluid were changed and the liquid barrier fluid had a composition that the gas produced by vaporizing the barrier fluid had a hydrogen concentration of 0.17 %. Furthermore, it contained 6.1 vol.% ethylene, 0.52 vol.% 1-hexene and 93.2 vol.% propane.
The combined quantity of fresh monomers fed into the downcomer through monomer feeding points (48), (49) and (50) were 9 kg/h of ethylene and 1.025 kg/h of 1-hexene.
For reaching the targeted composition of the reaction gas mixture within the riser, 5 kg/h of propane, 27.8 kg/h of ethylene and 30 g/h of hydrogen were fed through line (51) into the recycle line (29).
The polymerization conditions within riser (22) and downcomer (22) of multizone circulating reactor (21) are indicated in Table 1. Table 1 further reports the properties of the final polyethylene composition discharged from multizone circulating reactor (21).

Example 4

The polymerization of Example 1 was repeated under identical conditions except that the working of column (62) for generating the barrier fluid were changed and the liquid barrier fluid had a composition that the gas produced by vaporizing the barrier fluid had a hydrogen concentration of 0.10 %. Furthermore, it contained 5.8 vol.% ethylene, 0.49 vol.% 1-hexene and 93.6 vol.% propane.
The combined quantity of fresh monomers fed into the downcomer (23) through monomer feeding points (48), (49) and (50) were 9 kg/h of ethylene and 1.025 kg/h of 1-hexene.
For reaching the targeted composition of the reaction gas mixture within the riser, 5 kg/h of propane, 27.8 kg/h of ethylene and 33 g/h of hydrogen were fed through line (51) into the recycle line (29).
The polymerization conditions within riser (22) and downcomer (23) of multizone circulating reactor (21) are indicated in Table 1. Table 1 further reports the properties of the final polyethylene composition discharged from multizone circulating reactor (21).

Table 1

|  | Example 1 | Example 2 | Example 3 | Example 4 |
|---|---|---|---|---|
| Riser |  |  |  |  |
| Ethylene [vol.%] | 10.1 | 9.6 | 10.2 | 10.0 |
| Hydrogen [vol.%] | 2.22 | 2.62 | 3.58 | 3.80 |
| 1-Hexene [vol.%] | 0.18 | 0.21 | 0.23 | 0.21 |
| Ratio hydrogen/ethylene | 0.22 | 0.27 | 0.35 | 0.38 |
| Downcomer |  |  |  |  |
| Ethylene [vol.%] | 3.1 | 2.7 | 2.8 | 3.0 |
| Hydrogen [vol.%] | 0.29 | 0.24 | 0.18 | 0.10 |
| 1-Hexene [vol.%] | 0.38 | 0.40 | 0.39 | 0.41 |

(continued)

| Downcomer | | | | |
|---|---|---|---|---|
| Ratio hydrogen/ethylene | 0.094 | 0.089 | 0.064 | 0.033 |
| Properties of the polyethylene composition: | | | | |
| MFR$_{21.6}$ [g/10 min] | 36.0 | 37.3 | 36.2 | 35.9 |
| FRR (21.6/2.16) | 82.1 | 93.3 | 100.6 | 115.8 |
| Rheological dispersity ER | 2.7 | 2.9 | 3.1 | 3.5 |
| Density [g/cm$^3$] | 0.9529 | 0.9529 | 0.9531 | 0.9533 |
| Swell ratio [%] | 150 | 167 | 182 | 197 |
| FNCT [h] | 71 | 68 | 82 | 102 |
| OCS cast film defect area [ppm] | 3.7 | 3.8 | 3.0 | 1.8 |

Examples 1 to 4 show, based on polyethylene compositions comprising three polyethylene components which differ in the average molecular weight, that by varying the difference between the average molecular weight of the polyethylene component having the highest average molecular weight and the average molecular weight of the polyethylene component having the second-highest average molecular weight, it is possible to control the swell ratio of the polyethylene composition. The polyethylene compositions obtained in Examples 1 to 4 are characterized in that they all have substantially the same melt flow rate MFR$_{21}$ and also their polyethylene component having the lowest average molecular weight obtained in the fluidized-bed reactor is the same. Consequently, when varying the average molecular weight of the polyethylene component having the highest average molecular weight or of the polyethylene component having the second-highest average molecular weight, the average molecular weight of the other of the highest or the second-highest average molecular weight polyethylene components also has to be varied to counterbalance the first variation in order to arrive at the same melt flow rate of the final polyethylene compositions.

In Examples 1 to 4, the polyethylene components obtained in the downcomer (23) is the polyethylene components having the highest average molecular weight and the polyethylene components obtained in the riser (22) is the polyethylene components having the second-highest average molecular weight. When going from the conditions of Example 1 through the conditions of Examples 2 and 3 to the conditions of Example 4, the ratio hydrogen/ethylene in the downcomer decreases, i.e. the concentration of hydrogen in the downcomer declines and thus the average molecular weight of the polyethylene component having the highest average molecular weight increases. To counterbalance this variation in order to maintain the melt flow rate of the polyethylene composition, the ratio hydrogen/ethylene in the riser increases, resulting in a lower average molecular weight of the polyethylene component having the second-highest average molecular weight and hence in an increase of the difference between the average molecular weight of the polyethylene component having the highest average molecular weight and the average molecular weight of the polyethylene component having the second-highest average molecular weight.

The data of Table 1 show that the increase in the molecular weight difference between the highest and the second-highest average molecular weight polyethylene components at an unchanged melt flow rate of the final polyethylene composition effects an increase of the swell ratio from 150% to 197% without significantly impacting the further property profile polyethylene compositions.

The data of Table 1 also demonstrate that, vice versa, when going from Example 4 to Example 1, a decrease of the swell ratio can be effected when decreasing the difference between the average molecular weight of the polyethylene component having the highest average molecular weight and the average molecular weight of the polyethylene component having the second-highest average molecular weight.

Claims

1. A process for controlling the swell ratio of a multimodal polyethylene composition having a specified melt flow rate, wherein the polyethylene composition is prepared in a process conducted in a polymerization apparatus comprising three or more polymerization zones in the presence of a polymerization catalyst and hydrogen as molecular weight regulator and the polymerization zones differ in the ratio of hydrogen to ethylene present in the polymerization zones and so forming, in the polymerization zones, three or more polyethylene components which differ in the average molecular weight, wherein one of the polyethylene components prepared in one of the polymerization zones has the highest average molecular weight and one of the polyethylene components prepared in another one of the polymerization zones has the second-highest average molecular weight, wherein

for increasing the swell ratio, the difference between the average molecular weight of the polyethylene component having the highest average molecular weight and the average molecular weight of the polyethylene component having the second-highest average molecular weight is increased, and
for decreasing the swell ratio, the difference between the average molecular weight of the polyethylene component having the highest average molecular weight and the average molecular weight of the polyethylene component having the second-highest average molecular weight is decreased.

2. The process of claim 1, wherein the step of increasing or decreasing the difference between the average molecular weight of the polyethylene component having the highest average molecular weight and the average molecular weight of the polyethylene component having the second-highest average molecular weight is or includes a step of modifying the ratio of hydrogen to ethylene in the polymerization zones in which the polyethylene component having the highest average molecular weight is prepared or in the polymerization zones in which the polyethylene component having the second-highest average molecular weight is prepared.

3. The process of claim 1, wherein the step of increasing or decreasing the difference between the average molecular weight of the polyethylene component having the highest average molecular weight and the average molecular weight of the polyethylene component having the second-highest average molecular weight is or includes a step of changing the temperature in the polymerization zones in which the polyethylene component having the highest average molecular weight is prepared or in the polymerization zones in which the polyethylene component having the second-highest average molecular weight is prepared.

4. The process of claim 1, wherein, for keeping the melt flow rate of the polyethylene composition at the specified value while increasing or decreasing the difference between the average molecular weight of the polyethylene component having the highest average molecular weight and the average molecular weight of the polyethylene component having the second-highest average molecular weight, the polymerization conditions in one or more polymerization zones which are neither the polymerization zone, in which the polyethylene component having the highest average molecular weight is prepared, nor the polymerization zone, in which the polyethylene component having the second-highest average molecular weight is prepared, are changed.

5. The process of claim 1, wherein, for keeping the melt flow rate of the polyethylene composition at the specified value while increasing or decreasing the difference between the average molecular weight of the polyethylene component having the highest average molecular weight and the average molecular weight of the polyethylene component having the second-highest average molecular weight, the polymerization conditions in the polymerization zone, in which the polyethylene component having the second-highest average molecular weight is prepared, is changed.

6. The process of claim 5, wherein the polymerization conditions in one or more polymerization zones, which are neither the polymerization zone, in which the polyethylene component having the highest average molecular weight is prepared, nor the polymerization zone, in which the polyethylene component having the second-highest average molecular weight is prepared, are kept constant.

7. The process of claim 1, wherein the polymerization apparatus comprises a series of at least three subsequent polymerization reactors.

8. The process of claim 1, wherein the polymerization apparatus comprises a series of a fluidized-bed reactor and a multizone circulating reactor.

9. The process of claim 1, wherein a gas separator is provided between at least two polymerization zones, the gas separator removing a gas fraction of the reaction mixture between the at least two polymerization zones.

10. A process for preparing at least two types of polyethylene composition having a specified melt flow rate and different swell ratios, the process comprising polymerizing ethylene in the presence of a polymerization catalyst and hydrogen as a molecular weight regulator in a series of polymerization reactors comprising three or more polymerization zones, wherein the polymerization zones differ in the ratio of hydrogen to ethylene present in the polymerization zones and so forming, in the polymerization zones, three or more polyethylene components which differ in the average molecular weight, wherein one of the polyethylene components prepared in one of the polymerization zones has the highest average molecular weight and one of the polyethylene components prepared in another one of the polymerization zones has the second-highest average molecular weight, wherein for increasing the swell ratio, the difference between the average molecular weight of the polyethylene component having the highest average molecular weight and the average molecular weight of the polyethylene component having the second-highest average molecular weight is increased, and for decreasing the swell ratio, the difference between the average molecular weight of the polyethylene component having the highest average molecular weight and the average molecular weight of the polyethylene component having the second-highest average molecular weight is decreased.

11. The process of claim 10, wherein the at least two polyethylene compositions are prepared subsequently.

12. The process of claim 10 or 11, wherein at least one of the at least two polyethylene compositions is a high density polyethylene composition having a density of from 0.940 to 0.968 $g/cm^3$.

# Fig. 1

Fig. 2

Europäisches
Patentamt

European
Patent Office

Office européen
des brevets

# EUROPEAN SEARCH REPORT

**Application Number**

EP 22 20 3732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/309107 A1 (MEIER GERHARDUS [DE] ET AL) 10 October 2019 (2019-10-10)<br>* examples 1,2 *<br>* paragraph [0107] *<br>* figures 1,2 *<br>* table 1 * | 1-12 | INV.<br>C08F10/00<br>C08F110/02<br>C08L23/08<br>C08F210/16 |
| A | US 2021/332167 A1 (PENZO GIUSEPPE [IT] ET AL) 28 October 2021 (2021-10-28)<br>* examples 1,2 * | 1-12 | |
| X | US 2019/276649 A1 (DOETSCH DIANA [DE] ET AL) 12 September 2019 (2019-09-12)<br>* examples 1,2 * | 1-12 | |
| A | WO 2015/195188 A1 (UNIVATION TECH LLC [US]) 23 December 2015 (2015-12-23)<br>* claims 2,11 *<br>* paragraph [0013] *<br>* paragraph [0015] – paragraph [0016] *<br>* paragraph [0130] * | 1-12 | |
| | | | **TECHNICAL FIELDS SEARCHED (IPC)**<br>C08F<br>C08L |

The present search report has been drawn up for all claims

| Place of search | Date of completion of the search | Examiner |
|---|---|---|
| Munich | 20 March 2023 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 3732

20-03-2023

| Patent document cited in search report | | Publication date | Patent family member(s) | | Publication date |
|---|---|---|---|---|---|
| US 2019309107 | A1 | 10-10-2019 | AR | 110033 A1 | 13-02-2019 |
| | | | AU | 2017358710 B2 | 20-06-2019 |
| | | | BR | 112019008570 A2 | 09-07-2019 |
| | | | CA | 3043149 A1 | 17-05-2018 |
| | | | CN | 109937216 A | 25-06-2019 |
| | | | EP | 3321295 A1 | 16-05-2018 |
| | | | EP | 3510063 A1 | 17-07-2019 |
| | | | IL | 266417 A | 30-06-2019 |
| | | | JP | 6782358 B2 | 11-11-2020 |
| | | | JP | 2019533067 A | 14-11-2019 |
| | | | KR | 20190058674 A | 29-05-2019 |
| | | | MY | 187346 A | 22-09-2021 |
| | | | RU | 2709525 C1 | 18-12-2019 |
| | | | SG | 11201903294V A | 30-05-2019 |
| | | | US | 2019309107 A1 | 10-10-2019 |
| | | | WO | 2018087209 A1 | 17-05-2018 |
| US 2021332167 | A1 | 28-10-2021 | BR | 112021010757 A2 | 31-08-2021 |
| | | | CN | 113166284 A | 23-07-2021 |
| | | | EP | 3898709 A1 | 27-10-2021 |
| | | | JP | 2022515052 A | 17-02-2022 |
| | | | KR | 20210104784 A | 25-08-2021 |
| | | | RU | 2770427 C1 | 18-04-2022 |
| | | | US | 2021332167 A1 | 28-10-2021 |
| | | | WO | 2020127098 A1 | 25-06-2020 |
| US 2019276649 | A1 | 12-09-2019 | BR | 112019009961 A2 | 20-08-2019 |
| | | | CA | 3044697 A1 | 31-05-2018 |
| | | | CN | 109963879 A | 02-07-2019 |
| | | | EP | 3545006 A1 | 02-10-2019 |
| | | | ES | 2834034 T3 | 16-06-2021 |
| | | | JP | 6793834 B2 | 02-12-2020 |
| | | | JP | 2019533759 A | 21-11-2019 |
| | | | KR | 20190074314 A | 27-06-2019 |
| | | | PL | 3545006 T3 | 31-05-2021 |
| | | | RU | 2720235 C1 | 28-04-2020 |
| | | | US | 2019276649 A1 | 12-09-2019 |
| | | | WO | 2018095701 A1 | 31-05-2018 |
| WO 2015195188 | A1 | 23-12-2015 | BR | 112016029320 A2 | 22-08-2017 |
| | | | CN | 106574014 A | 19-04-2017 |
| | | | CN | 113321757 A | 31-08-2021 |
| | | | EP | 3155026 A1 | 19-04-2017 |
| | | | US | 2017137551 A1 | 18-05-2017 |
| | | | WO | 2015195188 A1 | 23-12-2015 |

EPO FORM P0459

For more details about this annex : see Official Journal of the European Patent Office, No. 12/82

**REFERENCES CITED IN THE DESCRIPTION**

**Patent documents cited in the description**

- WO 9704015 A1
- WO 0002929 A1
- US 5534472 A
- WO 2014202420 A1

**Non-patent literature cited in the description**

- **R. SHROFF ; H. MAVRIDIS.** New Measures of Polydispersity from Rheological Data on Polymer Melts. *J. Applied Polymer Science,* 1995, vol. 57, 1605